# EUROPEAN PATENT SPECIFICATION

(11) **EP 4 492 737 B1**
(45) Date of publication and mention of the grant of the patent: **25.02.2026**
(21) Application number: 23185370.6
(22) Date of filing: 13.07.2023
(51) Int. Cl.: H04L 12/40, H04L 43/0852

(54) **DETERMINING A LATENCY OF MESSAGES TRANSMITTED IN A SERIAL COMMUNICATION NETWORK**
BESTIMMUNG DER LATENZZEIT VON NACHRICHTEN, DIE IN EINEM SERIELLEN KOMMUNIKATIONSNETZ ÜBERTRAGEN WERDEN
DÉTERMINATION D'UNE LATENCE DE MESSAGES TRANSMIS DANS UN RÉSEAU DE COMMUNICATION SÉRIE

(43) Date of publication of application: 15.01.2025
(73) Proprietor: Volvo Car Corporation, 405 31 Göteborg (SE)
(72) Inventor: ANTONSSON, Anders, 40531 Göteborg (SE)
(74) Representative: Maiwald GmbH

(56) References cited:
- CN-A- 114 760 227
- CN-A- 116 319 457
- US-A1- 2015 063 120
- US-A1- 2017 324 675

## Description

### TECHNICAL FIELD

The present disclosure relates to a method for determining a latency of messages transmitted in a serial communication network.

The present disclosure is additionally directed to a data processing apparatus, a computer program and a computer-readable storage medium.

### BACKGROUND ART

In serial communication networks a bus is a shared resources in the sense that even though the network may comprise a plurality of nodes, the bus can only be utilized for data message transmission by one node at a time. An example of such a serial communication network is a Controller Area Network (CAN). In this context, the bus is called a CAN bus.

Such serial communication networks are used in automotive and other applications. Depending on the specific applications, certain requirements concerning one or more of throughput, bus utilization, data transfer priority and data transfer latency may need to be met by a system designer designing this serial communication network. Especially when used in a vehicle, i.e. in automotive applications, the design of such a network is often a compromise between throughput, bus utilization, data transfer priority and data transfer latency.

As far as data transfer priority is concerned, the use of data message priorities is known. These data message priorities are assigned by the system designer to one or more of the messages to be transmitted within the network. In CAN protocols, for example in CAN Classic, CAN Flexible Data and CAN XL frame formats, the priority is simply a unique number assigned to each data message, where lower numbers have higher priority than higher numbers. In this context, the priority number is also called an identifier since it is noted in the identifier field. In an example, a data messages for an electric propulsion control system of a vehicle can be assigned a higher priority than a messages for an air conditioning system of the vehicle.

In order to determine the priority of message transmission, the priority number is used in a so-called arbitration process. Thus, if more than one node of the network attempts to transmit a data message at the same time, the data message with the higher priority will win the arbitration and can be transmitted. Any lower data priority message will lose arbitration, i.e. will not be transmitted directly but can make a new transmission attempt after the higher priority message has been transmitted. When there are no more higher priority messages to be transmitted, the lower priority message can be transmitted. Thus, winning arbitration results in a reduced message delay or latency. Losing arbitration results in an increased delay or latency until the message is transmitted.

Usually, the design of such a serial communication network requires a comprehensive design and verification effort in order to fulfil the above-mentioned requirements, e.g. relating to data transfer latency. In this context, US 2015/0063120 A1 is directed to a controller area network worst-case message latency with priority inversion. CN 114760227 A relates to a message sending delay test method.

### SUMMARY

It is an objective of the present disclosure to facilitate the verification of data transfer latency requirements for a serial communication network.

The problem is at least partially solved or alleviated by the subject matter of the independent claims of the present disclosure, wherein further examples are incorporated in the dependent claims.

According to a first aspect, there is provided a method for determining a latency of messages transmitted in a serial communication network. The serial communication network comprises a first node, a second node, and a shared bus. The first node and the second node are communicatively connected to the shared bus. The method comprises:
- receiving network design data indicative of at least a first message and second message associated with the first node and a further message associated with the second node, wherein the first message has a first message duration and a first priority indicator, wherein the second message has a second message duration and a second priority indicator, and wherein the further message has a further message duration and a further priority indicator,
- receiving or determining delay time data at least indicative of a time span between an end of the first message and a start of the second message,
- calculating a message transmission sequence based on the network design data and the delay time data, and
- calculating a latency indicator for each message, the latency indicator describing a time period until the start of transmission of each message based on the message transmission sequence.

It is noted that the fact that the serial communication network comprises a first node, a second node, and a shared bus is to be understood in that the serial communication network comprises at least the first node and the second node sharing the bus. Moreover, it is understood that beyond the first message and the second message, additional messages may be associated to the first node. In the same manner, beyond the further message, additional messages may be associated with the second node. The network design data is indicative of these additional messages. Moreover, the network design data may be indicative of priorities assigned to at least the first message, the second message and the further message. Thus, the network design data is indicative of a design of the serial communication network. The received or determined delay time data is indicative of delays. The delays are for example a consequence of a system design fault, a configuration fault of the serial communication network, or an implementation fault. Such faults can adversely affect latency of messages by increasing transfer time for higher priority messages and, as a consequence, potentially violate timing requirements. This may be unacceptable, acceptable to some extent or can cause unpredictable system behaviors. If the messages are part of a time critical system, increased message latencies beyond requirements may make the system unpredictable, unstable, or completely fail. Further, such faults are not deterministic. Thus, it is necessary to evaluate these delays once the design of the serial communication network is terminated or has reached a predefined intermediate stage. Using the present method, a message transmission sequence may be calculated based on the network design data and delay time data. This means that an order of all the messages transmitted over the shared bus is determined. This includes at least the first message, the second message and the further message. Based thereon, a latency indicator may be calculated for each message. In other words, a latency of each message may be assessed. This is a valuable information during a design phase of the serial communication network and during a test phase or validation phase of the serial communication network. The fact that the calculation of the latency indicator is based on delay time data renders the latency indicator highly reliable and realistic.

It is noted that the method according to the present disclosure is based on the finding that messages to be transmitted in a serial communication network often cannot be directly transmitted but are delayed by other messages already occupying the bus. This is not necessarily a problem but must be precisely studied such that overall requirements concerning data transfer latency may be met. The method according to the present disclosure provides a simple and reliable means to assess these latencies.

According to an example, the network design data has a file-based format. In this context, the network design data may comprise a SPICE models, a Verilog source code, VHDL, C/C++ software source code, assembler code, microcontroller code, machine code, object code, a CAN data base, DBC files, FIBEX files, Autosar system description, plain text or similar.

According to a further example, the network design data is indicative of a number of additional hardware functions that can be described in a network design, such as single or multiple message buffers and their sizes, internal priority-based queues, queue size or depth, first-in-first-out queues (FIFO), other types of queues and buffers.

According to another example, the network design data is indicative of a communication log including for example CAN nodes, CAN controllers, transmitted and received messages, message priorities and/or identifiers. The communication log can be defined in many file-based formats, e.g., binary log file BLF or plain text.

According to an example, the serial communication network is applied in an air conditioning system of a vehicle, a brake control system of a vehicle or an engine control system of the vehicle. In a further alternative, the serial communication network forms part of a sensor system of a vehicle. The above-described method may be applied on the serial communication network independent from the field of application.

According to the present disclosure, calculating a message transmission sequence comprises
- determining that the shared bus is at least potentially idle or receiving a bus idle status,
- determining the message having the relatively highest priority indicated by the relatively lowest priority indicator, and
- documenting transmission of the message having the relatively highest priority.

In this context, the term potentially idle is used since depending on the delay associated with the message having the relatively highest priority, the bus may effectively not be idle in a case in which the delay is zero. These steps may be executed several times until all messages described by the network design data are transmitted, i.e. have reached their destination. In this context, the method may comprise parsing the messages of each node in order to find the message that has the highest priority. This may be done at a starting point and at any point the bus is found to be idle. In this context, the fact that the bus is idle means that the bus is open for new messages. In such a case, the present method will look for messages from the nodes. The documentation of the transmission of a message may comprise a record of a starting time of the transmission and an end time of the transmission. The step of determining the message having the relatively highest priority may be called an arbitration step. Of course, the transmission delays described by the delay time data are taken into account. Thus, a realistic message transmission sequence may be calculated.

In an example, calculating a message transmission sequence comprises determining the message having the relatively shortest delay indicated by the delay time data. Thus, when calculating the message transmission sequence, the message having the relatively shortest delay is considered to be transmitted first. As before, the step of determining the message having the relatively shortest delay may be executed several times until all messages described by the network design data are transmitted. This leads to a realistic message transmission sequence.

It is noted that the determination of the message having the relatively highest priority and the message having the relatively shortest delay may be combined. Thus, in case of more than one transmission delays, the node having the smallest transmission delay and the message of highest priority message wins the arbitration. Thus, a realistic message transmission sequence may be calculated.

It is noted that the calculated message transmission sequence may be subject to so-called outer priority inversion. This is a common fault describing the fact that the priority of the messages are not respected in the correct manner on a system-level or network-level. This means that even though each of the nodes may transmit its own associated messages in the correct order, i.e. the order defined by the priorities, messages on the shared bus may have an incorrect order. An example reason for such an outer priority inversion may be an idle time between two messages from the same node. In such a case, a second node may deliver a message during the idle time. However, the message of the second node may have a lower priority than the second message of the first node. Outer priority inversion may have severe consequences on system-level and therefore is to be avoided. The method according to the present disclosure helps to identify outer priority inversion consequences via the message transmission sequence and the latency indicator.

In an example, the method further comprises determining an absence of inner priority inversion for the first node and/or for the second node. In other words, the method comprises determining that each of the first node and/or the second node delivers the associated messages in the correct order of priority when regarding the respective node alone. Consequently, such a fault on node level may be excluded.

According to an example, the delay time data describes a delay of one nominal bit time (NBT) up to a message duration. Thus, the shortest delay that is considered by the present method has the length of one nominal bit time. The longest delay that is considered by the present method has the length of a message duration. Altogether, a reliable message transmission sequence may be calculated.

In an example, the latency indicator comprises at least one of a preparation time of the relevant first node or second node and an interval intermission time. In other words, the latency indicator is indicative of a preparation time of the relevant first node or the relevant second node and an interval intermission time. In this context, the actual message can have an individual length or a standard length. Based thereon, a reliable message transmission sequence may be calculated.

In an example, the method further comprises providing a latency report. A latency report may be machine-readable and/or readable by a human being. In the latter case, the latency report for example graphically illustrates message transmission sequences. The latency for each message may be numerically calculated. Such a latency report provides valuable information during the design of a serial communication network. For example, different alternative designs may be compared based on the latency report. Alternatively, the latency report may be an outcome of a test of a given serial communication network, e.g. received from a supplier.

In an example, the method further comprises determining a maximum latency indicator and the associated message. In simplified words, the message having the highest delay is identified. As has already been mentioned before, this is a valuable information during design of a serial communication network and/or during test of a serial communication network.

In an example, the method further comprises
- receiving target maximum latency data indicative of a required maximum latency,
- comparing each latency indicator to the required maximum latency,
- providing delay status data indicative of the fact whether at least one latency indicator exceeds the required maximum latency.

In this context, the required maximum latency may be application-specific and may describe a maximum latency that is tolerable in this specific application. Thus, the method provides a result indicating whether or not one or more of the latency indicators exceed the required maximum latency. This can be done in the form of a simple status indicating that at least one delayed message is present. Alternatively or additionally the delay status data comprises an indication of the delayed messages. This information is highly valuable when designing a serial communication network and/or when testing a serial communication network.

According to a second aspect, there is provided a data processing apparatus comprising means for carrying out the method of the present disclosure. Thus, using the data processing apparatus, a message transmission sequence may be calculated based on the network design data and delay time data. This means that an order of all the messages transmitted over the shared bus is determined. This includes at least the first message, the second message and the further message. Based thereon, a latency indicator may be calculated for each message. In other words, a latency of each message may be assessed. This is a valuable information during a design phase of the serial communication network and during a test phase or validation phase of the serial communication network. The fact that the calculation of the latency indicator is based on delay time data renders the latency indicator highly reliable and realistic.

According to a third aspect, there is provided a computer program comprising instructions which, when the computer program is executed by a computer, cause the computer to carry out the method of the present disclosure. Thus, using the computer program, a message transmission sequence may be calculated based on the network design data and delay time data. This means that an order of all the messages transmitted over the shared bus is determined. This includes at least the first message, the second message and the further message. Based thereon, a latency indicator may be calculated for each message. In other words, a latency of each message may be assessed. This is a valuable information during a design phase of the serial communication network and during a test phase or validation phase of the serial communication network. The fact that the calculation of the latency indicator is based on delay time data renders the latency indicator highly reliable and realistic.

According to a fourth aspect, there is provided a computer-readable storage medium comprising instructions which, when executed by a computer, cause the computer to carry out the method of the present disclosure. Thus, using the computer-readable storage medium, a message transmission sequence may be calculated based on the network design data and delay time data. This means that an order of all the messages transmitted over the shared bus is determined. This includes at least the first message, the second message and the further message. Based thereon, a latency indicator may be calculated for each message. In other words, a latency of each message may be assessed. This is a valuable information during a design phase of the serial communication network and during a test phase or validation phase of the serial communication network. The fact that the calculation of the latency indicator is based on delay time data renders the latency indicator highly reliable and realistic.

According to an example not forming part of the present disclosure, there is provided a use of delay time data indicative of a time span between an end of a first message and a start of a second message for calculating latency of messages transmitted in a serial communication network. Thus, using the delay time data, a realistic message transmission sequence may be calculated. Based thereon, a latency indicator may be calculated for each message. In other words, a latency of each message may be assessed. This is done on system-level or network-level. In doing so, faults resulting from outer priority inversion may be identified and mitigated. This is helpful during a design phase of the serial communication network and during a test phase or validation phase of the serial communication network.

The method of the present disclosure may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a serial communication network on which a method according to the present disclosure for determining a latency of messages is applied,
- Figure 2: shows a data processing apparatus according to the present disclosure having a computer-readable storage medium according to the present disclosure and a computer program according to the present disclosure,
- Figure 3: shows a message transmission sequence generated using the method for determining a latency of messages in accordance with a first example,
- Figure 4: shows a message transmission sequence generated using the method for determining a latency of messages in accordance with a second example,
- Figure 5: shows a message transmission sequence generated using the method for determining a latency of messages in accordance with a third example, and
- Figure 6: shows a message transmission sequence generated using the method for determining a latency of messages in accordance with a fourth example.

### DETAILED DESCRIPTION

The Figures are merely schematic representations and serve only to illustrate examples of the disclosure. Identical or equivalent elements are in principle provided with the same reference signs.

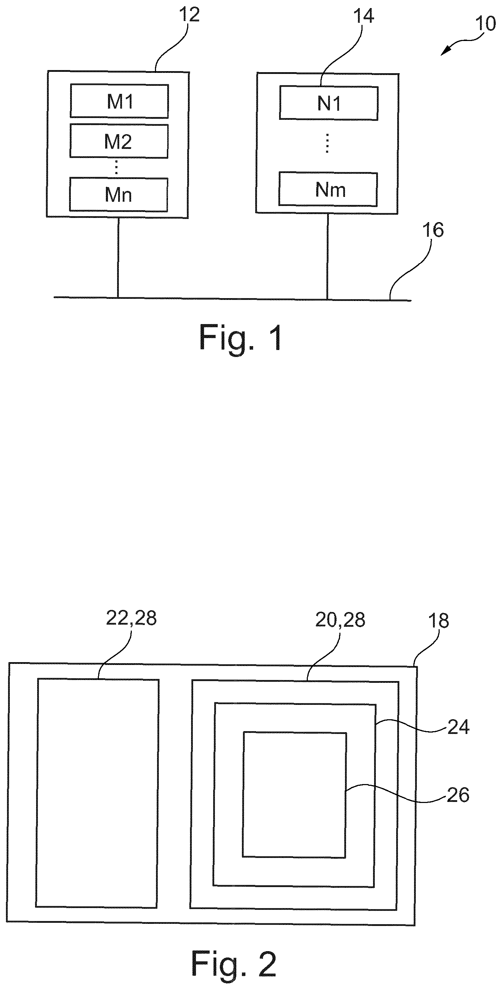

Figure 1 shows a serial communication network 10.

The serial communication network 10 comprises a first node 12 and a second node 14.

Moreover, the serial communication network 10 comprises a shared bus 16.

Both the first node 12 and the second node 14 are communicatively connected to the shared bus 16.

A first message M1 and a second message M2 are associated with the first node 12. This means that the first node 12 has the task to send at least the first message M1 and the second message M2. More generally speaking, n messages M1 to Mn are associated with the first node 12 and the first node 12 has the task to send the n messages M1 to Mn.

A further message N1 is associated with the second node 14. This means that the second node 14 has the task to send at least the further message N1. More generally speaking, m messages N1 to Nm are associated with the second node 14 and the second node 14 has the task to send the m messages N1 to Nm.

This will be explained in further detail when explaining different examples of a method for determining a latency of messages transmitted in a serial communication network further below.

Figure 2 shows a data processing apparatus 18.

The data processing apparatus 18 comprises a data storage unit 20 and a data processing unit 22.

The data storage unit 20 comprises a computer-readable storage medium 24.

On the computer-readable storage medium 24, there is provided a computer program 26.

The computer program 26 and, thus, also the computer-readable storage medium 24 comprise instructions which, when the computer program 26 is executed by the data processing unit 22 or, more generally, a computer, cause the data processing unit 22 or the computer to carry out a method for determining a latency of messages transmitted in a serial communication network.

Consequently, the data storage unit 20 and the data processing unit 22 form means 28 for carrying out the method for determining a latency of messages transmitted in a serial communication network.

In the following, the method for determining a latency of messages transmitted in a serial communication network will be explained in accordance with a total of four examples.

In a first example, three messages M1, M2, M3 are associated with the first node 12 and three messages N1, N2, N3 are associated with the second node 14. Thus, both m and n amount to 3.

The following priority indicators and durations are associated with the messages of the first node 12. It is noted that in the present example, the duration of all three messages M1, M2, M3 is the same. Additionally, delay time data indicative of a time span between an end of the previous message and the message to which the delay time data is associated, is provided in the below table. In other words, the delay time data describe a delay until the transmission of the associated message starts in relation to the previous message from the same node, here the first node 12.

| | Priority indicator | duration | Delay time data |
|---|---|---|---|
| M1 | 1 | 0,254 ms | 0 |
| M2 | 2 | 0,254 ms | 0 |
| M3 | 3 | 0,254 ms | 0,025 ms |

As far as the messages N1, N2, and N3 associated with the second node 14 are concerned, the following priority indicators and durations are provided. As before, the duration of all three messages N1, N2, N3 is the same. Additionally, delay time data indicative of a time span between an end of the previous message from the same node, i.e. from the second node 14, and the message to which the delay time data is associated, is provided in the below table:

| | Priority indicator | duration | Delay time data |
|---|---|---|---|
| N1 | 10 | 0,254 ms | 0 |
| N2 | 11 | 0,254 ms | 0 |
| N3 | 12 | 0,254 ms | 0 |

In a first step S1 of the method, network design data is received.

Network design data is indicative of the first node 12 and the three messages M1, M2, M3 associated with the first node 12. Beyond that, the network design data is indicative of the priority indicators, and the durations of the three messages M1, M2, M3 as indicated in the above table.

Moreover, the network design data is indicative of the second node 14 and the three messages N1, N2, N3 associated with the second node 14. Beyond that, the network design data is indicative of the priority indicators, and the duration of the three messages N1, N2, N3 as indicated in the above table.

Moreover, the network design data is indicative of the shared bus 16 to which the first node 12 and the second node 14 are connected.

A second step S2 comprises receiving delay time data. The delay time data is received for each of the messages M1, M2, M3, N1, N2, N3 as indicated in the above tables.

The durations of the messages M1, M2, M3, N1, N2, N3 and the associated delay time data can be pre-calculated and provided in the design data e.g. as numerical time values in the unit of milliseconds. Alternatively, the durations of the messages M1, M2, M3, N1, N2, N3 and the associated delay time data may be provided as a number of nominal bit times multiplied with the nominal bit time duration. As an option, the nominal bit time can be calculated from the bit rate bps/sec: NBT=1/bits per second

In the present example, the delay time data describes a delay of one nominal bit time up to a message duration. This means that the delay described by the delay time data is shorter than or equal to 0,254 ms. In some examples, delay time data can be in the form of real time e.g. milliseconds, or alternatively as a number of nominal bit times multiplied with duration of a nominal bit time.

Thereafter, in a third step S3, a message transmission sequence 30 is calculated based on the network design data and the delay time data.

To this end, the messages to be transmitted in the network are parsed until the message with the overall highest priority is found. The overall highest priority is indicated by the lowest priority indicator. In the present example, this is message M1.

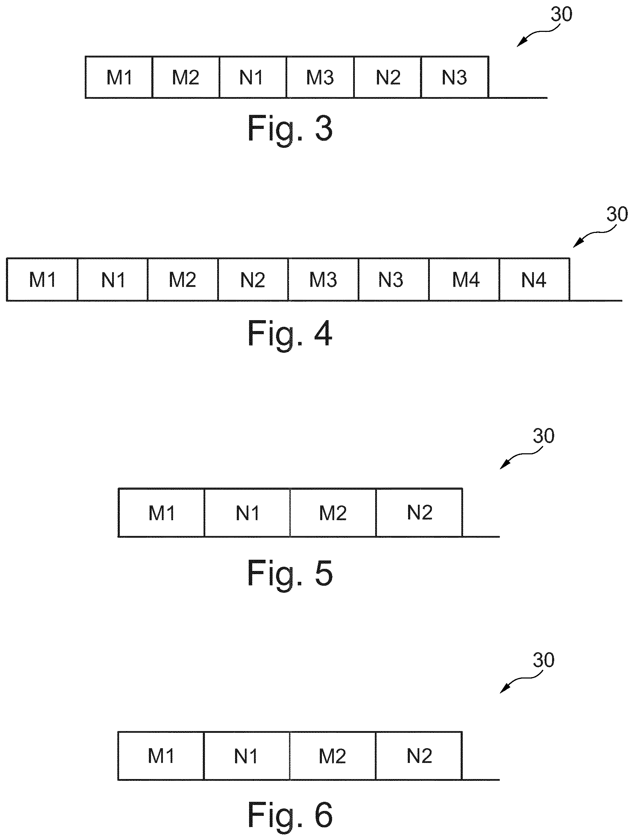

In case the message transmission sequence 30 is represented graphically, the message M1 can be represented as shown in Figure 3. Alternatively, the duration of message M1 may be simply added to a starting time.

At the same time, delay time data associated with this message M1 is considered. However, in the present example, there is no delay associated with message M1.

It is noted that the present example is based on that delay time data for message M1 and message N1 is always zero. This align both nodes 12 and 14 in respect of the associated message transmission sequences to start at the same time and hence causes a worst case effect of delay time data associated with further messages M2, N2, M3, N3.

After the transmission of message M1, the bus 16 is potentially idle again. Thus, the outstanding messages to be transmitted in the network are parsed again until the outstanding message with the overall highest priority is found. In the present example, this is message M2.

As before, the message M2 may be represented graphically as shown in Figure 3. Alternatively, the duration of message M2 may be simply added to the end time of the transmission of the message M1.

At the same time, delay time data associated with this message M2 is considered. However, in the present example, there is no delay associated with message M2 and hence the bus 16 will not become effectively idle directly following message M1.

After the transmission of message M2, the bus 16 is potentially idle again. Thus, the outstanding messages to be transmitted in the network are parsed again until the outstanding message with the overall highest priority is found. In the present example, this is message M3.

In contrast to messages M1 and M2, message M3 is associated with a delay. This means that the transmission of the message M3 does not start immediately but only after the lapse of the delay.

Consequently, during the delay associated with message M3, the bus 16 is potentially idle while the first node 12 is occupied preparing message M3 to be transmitted.

Consequently, during potential idling of the bus 16, the outstanding messages to be transmitted, except message M3, are parsed again until the outstanding message with the overall highest priority is found. In the present example, this is message N1.

Message N1 is not associated with a delay in the present example.

Consequently, message N1 will be transmitted after message M2 and hence the bus 16 will not become effectively idle directly following message M2.

As before, the message N1 may be represented graphically as shown in Figure 3. Alternatively, the duration of message N1 may be simply added to the end time of the transmission of the message M2.

Due to the fact that the delay time associated with message M3 is shorter than a duration of the messages, message M3 is ready to be transmitted shortly after the transmission of message N1 has started. However, at this point in time, the bus 16 is busy.

Consequently, message M3 is transmitted as soon as the bus 16 is idle again, i.e. after the transmission of message N1 has been terminated.

After the transmission of message M3, the bus 16 is potentially idle again. Thus, the outstanding messages to be transmitted in the network are parsed once more until the outstanding message with the overall highest priority is found. In the present example, this is message N2 and hence the bus 16 will not become effectively idle directly following message M3.

As before, the message N2 may be represented graphically as shown in Figure 3. Alternatively, the duration of the message N2 may be simply added to the end time of the transmission of the message M3.

At the same time, delay time data associated with this message N2 is considered. However, in the present example, there is no delay associated with message N2.

After the transmission of message N2, the bus is potentially idle again. Thus, the outstanding messages to be transmitted in the network are parsed once more until the outstanding message with the overall highest priority is found. In the present example, this is message N3 which is the only outstanding message in the present example.

As before, the message N3 may be represented graphically as shown in Figure 3. Alternatively, the duration of the message N3 may be simply added to the end time of the transmission of the message N2.

At the same time, delay time data associated with this message N3 is considered. However, in the present example, there is no delay associated with message N3.

Thus, the message transmission sequence 30 is complete as shown in Figure 3. In this example, once the start of transmission of the first message M1 has been initiated, the bus 16 will not become effectively idle until after the last message N3.

In the present example, the message transmission sequence 30, i.e. the transmission of messages M1, M2, M3, N1, N2, N3 is documented.

Optionally, the determined message transmission sequence 30 may be checked for inner priority inversion. This means that for each of the nodes, in the present example the first node 12 and the second node 14, the order of transmitted messages is assessed without respecting messages transmitted by other nodes. If from the perspective of each node, in the present example the first node 12 and the second node 14, the order of messages is in accordance with the priorities, and absence of inner priority inversion is determined.

This is the case in the present example for both the first node 12 and the second node 14.

In a fourth step S4, a latency indicator is calculated for each message M1, M2, M3, N1, N2, N3. The latency indicator describes a time period until the start of transmission of each message based on the message transmission sequence 30.

In the present example, the following latency indicators are found

| | |
|---|---|
| M1 | 0,000 ms |
| M2 | 0,254 ms |
| M3 | 0,762 ms |
| N1 | 0,508 ms |
| N2 | 1,016 ms |
| N3 | 1,270 ms |

In this context, the latency indicator also comprises a preparation time of the relevant first node or second node and an interval intermission time.

In a subsequent fifth step S5, a latency report is provided which comprises the above latency indicators.

In an optional sixth step S6, a maximum latency indicator and the associated message is determined. In the above example, the maximum latency indicator is 1,270 ms and the associated message is N3. This information may be added to the latency report.

In an optional 7^{th} step, S7, target maximum latency data is received. The target maximum latency data is indicative of a required maximum latency.

Thus, each latency indicator may be compared to the required maximum latency.

Based thereon, delay status data may be provided. The delay status data is indicative of the fact whether at least one latency indicator exceeds the required maximum latency.

Such a latency report provides valuable information during the design phase of the serial communication network 10. Moreover, such a latency report provides valuable information when testing the serial communication network 10.

A second example will be explained in connection with Figure 4. In the following, only the differences with respect to the first example will be explained.

In the second example, the following messages are associated with the first node 12. Thus, n amounts to 4.

| | Priority indicator | duration | Delay time data |
|---|---|---|---|
| M1 | 1 | 0,254 ms | 0 |
| M2 | 2 | 0,254 ms | 0,025 ms |
| M3 | 3 | 0,254 ms | 0,025 ms |
| M4 | 4 | 0,254 ms | 0,025 ms |

Following messages are associated with the second node 14. Thus, m amounts to 4.

| | Priority indicator | duration | Delay time data |
|---|---|---|---|
| N1 | 10 | 0,254 ms | 0 |
| N2 | 11 | 0,254 ms | 0 |
| N3 | 12 | 0,254 ms | 0 |
| N4 | 13 | 0,254 ms | 0 |

The message transmission sequence 30 is calculated in the same manner as has been explained in connection with the first example.

Due to the fact that a delay is associated with messages M2, M3, and M4, the bus 16 is potentially idle before the transmission of each of these messages M2, M3 and M4 such that each time a message with the relatively highest priority of the second node 14 is transmitted.

In the present example, the following latency indicators are found

| | |
|---|---|
| M1 | 0,000 ms |
| M2 | 0,508 ms |
| M3 | 1,016 ms |
| M4 | 1,524 ms |
| N1 | 0,254 ms |
| N2 | 0,762 ms |
| N3 | 1,270 ms |
| N4 | 1,778 ms |

A third example will be explained in connection with Figure 5. In the following, only the differences with respect to the first example and the second example will be explained.

In the third example, the following messages are associated with the first node 12. Thus n is 2.

| | Priority indicator | duration | Delay time data |
|---|---|---|---|
| M1 | 1 | 0,254 ms | 0 |
| M2 | 2 | 0,254 ms | 0,043 ms |

Following messages are associated with the second node 14. Thus, m is 2.

| | Priority indicator | duration | Delay time data |
|---|---|---|---|
| N1 | 10 | 0,254 ms | 0 |
| N2 | 11 | 0,254 ms | 0,027 |

The message transmission sequence 30 is calculated in the same manner as has been explained in connection with the first example.

In this example, it has to be noted that both message M2 and message N2 are associated with a delay. As has been mentioned before, the delay refers to a previous message associated with the same node. However, directly after message N1 has been transmitted, the delay for messages M2 and N2 has already elapsed during transmission of message N1. Consequently, both messages M2 and N2 are ready for arbitration directly following the transmission of message N1. Message M2 will win arbitration over N2 due to its higher priority and is transmitted before N2. Consequently, despite message N2 has a shorter delay time compared to the delay time for message M2, still M2 is transmitted before N2.

Altogether, the bus 16 will not be idle during the transmission of messages M1, M2, N1, N2.

In the present example, the following latency indicators are found

| | |
|---|---|
| M1 | 0,000 ms |
| M2 | 0,508 ms |
| N1 | 0,254 ms |
| N2 | 0,762 ms |

A fourth example will be explained in connection with Figure 6. In the following, only the differences with respect to the above examples will be explained.

In the fourth example, the following messages are associated with the first node 12. Thus, n is 2.

| | Priority indicator | duration | Delay time data |
|---|---|---|---|
| M1 | 1 | 0,254 ms | 0 |
| M2 | 2 | 0,254 ms | 0,027 ms |

Following messages are associated with the second node 14. Thus, m is 2.

| | Priority indicator | duration | Delay time data |
|---|---|---|---|
| N1 | 10 | 0,254 ms | 0 |
| N2 | 11 | 0,254 ms | 0,043 |

The message transmission sequence 30 is calculated in the same manner as has been explained in connection with the first example and message transmission order will be based on the relative priority of messages M2 versus N2.

In this example, it has to be noted that both message M2 and message N2 are associated with a delay. However, in contrast to the third example, the delay associated with message N2 is larger than the delay associated with message M2. As before, it has to be noted that the delay refers to a previous message associated with the same node.

Thus, also in the example of Figure 6, the bus 16 is not idle during the transmission of the messages M1, M2, N1, N2.

In the present example, the following latency indicators are found

| | |
|---|---|
| M1 | 0,000 ms |
| M2 | 0,508 ms |
| N1 | 0,254 ms |
| N2 | 0,762 ms |

In all of the above examples, delay time data is used for calculating latency of messages transmitted in a serial communication network. The delay time data is indicative of a time span between an end of a first message and a start of a second message.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: serial communication network
- 12: first node
- 14: second node
- 16: shared bus
- 18: data processing apparatus
- 20: data storage unit
- 22: data processing unit
- 24: computer-readable storage medium
- 26: computer program
- 28: means for carrying out the method for determining a latency of messages transmitted in a serial communication network
- 30: transmission sequence

- M1-Mn: messages associated with the first node
- N1-Nm: messages associated with the second node
- S1: first step
- S2: second step
- S3: third step
- S4: fourth step
- S5: fifth step
- S6: sixth step
- S7: seventh step

## Claims

1. A method for determining a latency of messages (M1-Mn, N1-Nm) transmitted in a serial communication network (10), the serial communication network (10) comprising a first node (12), a second node (14), and a shared bus (16), wherein the first node (12) and the second node (14) are communicatively connected to the shared bus (16), the method comprising:
- receiving network design data indicative of at least a first message (M1) and second message (M2) associated with the first node (12) and a further message (N1) associated with the second node (14), wherein the first message (M1) has a first message duration and a first priority indicator, wherein the second message (M2) has a second message duration and a second priority indicator, and wherein the further message (N1) has a further message duration and a further priority indicator,
- receiving or determining delay time data at least indicative of a time span between an end of the first message (M1) and a start of the second message (M2),
- calculating a message transmission sequence (30) based on the network design data and the delay time data, wherein calculating a message transmission sequence (30) comprises determining that the shared bus (16) is at least potentially idle or receiving a bus idle status, determining the message (M1-Mn, N1-Nm) having the relatively highest priority indicated by the relatively lowest priority indicator, and documenting transmission of the message (M1-Mn, N1-Nm) having the relatively highest priority, and
- calculating a latency indicator for each message (M1-Mn, N1-Nm), the latency indicator describing a time period until the start of transmission of each message (M1-Mn, N1-Nm) based on the message transmission sequence (30).

2. The method of claim 1, wherein calculating a message transmission sequence (30) comprises determining the message (M1-Mn, N1-Nm) having the relatively shortest delay indicated by the delay time data.

3. The method of any of the preceding claims, further comprising determining an absence of inner priority inversion for the first node (12) and/or for the second node (14).

4. The method of any one of the preceding claims, wherein the delay time data describes a delay of one nominal bit time up to a message duration.

5. The method of any one of the preceding claims, wherein the latency indicator comprises at least one of a preparation time of the relevant first node (12) or second node (14) and an interval intermission time.

6. The method of any one of the preceding claims, further comprising providing a latency report.

7. The method of any one of the preceding claims, further comprising determining a maximum latency indicator and the associated message (M1-Mn, N1-Nm).

8. The method of any one of the preceding claims, further comprising
- receiving target maximum latency data indicative of a required maximum latency,
- comparing each latency indicator to the required maximum latency,
- providing delay status data indicative of the fact whether at least one latency indicator exceeds the required maximum latency.

9. A data processing apparatus (18) comprising means (28) for carrying out the method of any one of the preceding claims.

10. A computer program (26) comprising instructions which, when the computer program (26) is executed by a computer, cause the computer to carry out the method of claims 1 to 8.

11. A computer-readable storage medium (24) comprising instructions which, when executed by a computer, cause the computer to carry out the method of claims 1 to 8.

## Patentansprüche

1. Verfahren zum Bestimmen einer Latenz von Nachrichten (M1-Mn, N1-Nm), die in einem seriellen Kommunikationsnetzwerk (10) übertragen werden, wobei das serielle Kommunikationsnetzwerk (10) einen ersten Knoten (12), einen zweiten Knoten (14) und einen gemeinsam genutzten Bus (16) umfasst, wobei der erste Knoten (12) und der zweite Knoten (14) kommunikativ mit dem gemeinsam genutzten Bus (16) verbunden sind, wobei das Verfahren umfasst:
- Empfangen von Netzwerkdesign-Daten, die mindestens eine erste Nachricht (M1) und eine zweite Nachricht (M2) angeben, die dem ersten Knoten (12) zugeordnet sind, und eine weitere Nachricht (N1), die dem zweiten Knoten zugeordnet ist (14), wobei die erste Nachricht (M1) eine erste Nachrichtendauer und einen ersten Prioritätsindikator aufweist, wobei die zweite Nachricht (M2) eine zweite Nachrichtendauer und einen zweiten Prioritätsindikator aufweist und wobei die weitere Nachricht (N1) eine weitere Nachrichtendauer und einen weiteren Prioritätsindikator aufweist,
- Empfangen oder Bestimmen von Verzögerungszeitdaten, die mindestens eine Zeitspanne zwischen einem Ende der ersten Nachricht (M1) und einem Beginn der zweiten Nachricht (M2) angeben,
- Berechnen einer Nachrichtenübertragungssequenz (30) basierend auf den Netzwerkdesign-Daten und den Verzögerungszeitdaten, wobei das Berechnen einer Nachrichtenübertragungssequenz (30) das Bestimmen, dass der gemeinsam genutzte Bus (16) zumindest potenziell frei ist oder einen Bus-Freigabestatus empfängt, das Bestimmen der Nachricht (M1-Mn, N1-Nm) mit der relativ höchsten Priorität, die durch den Indikator für die relativ niedrigste Priorität angegeben wird, und das Dokumentieren einer Übertragung der Nachricht (M1-Mn, N1-Nm) mit der relativ höchsten Priorität umfasst, und
- Berechnen eines Latenzindikators für jede Nachricht (M1-Mn, N1-Nm), wobei der Latenzindikator einen Zeitraum bis zu dem Beginn der Übertragung jeder Nachricht (M1-Mn, N1-Nm) basierend auf der Nachrichtenübertragungssequenz (30) beschreibt.

2. Verfahren nach Anspruch 1, wobei das Berechnen einer
Nachrichtenübertragungssequenz (30) das Bestimmen der Nachricht (M1-Mn, N1-Nm) mit der relativ kürzesten Verzögerung, die durch die Verzögerungszeitdaten angegeben wird, umfasst.

3. Verfahren nach einem der vorhergehenden Ansprüche, ferner umfassend das Bestimmen einer Abwesenheit einer inneren Prioritätsumkehr für den ersten Knoten (12) und/oder für den zweiten Knoten (14).

4. Verfahren nach einem der vorhergehenden Ansprüche, wobei die Verzögerungszeitdaten eine Verzögerung von einer nominalen Bitzeit bis zu einer Nachrichtendauer beschreiben.

5. Verfahren nach einem der vorhergehenden Ansprüche, wobei der Latenzindikator eine Vorbereitungszeit des relevanten ersten Knotens (12) oder zweiten Knotens (14) und/oder eine Intervallunterbrechungszeit umfasst.

6. Verfahren nach einem der vorhergehenden Ansprüche, ferner umfassend das Bereitstellen eines Latenzberichts.

7. Verfahren nach einem der vorhergehenden Ansprüche, ferner umfassend das Bestimmen eines Indikators für die maximale Latenz und der zugeordneten Nachricht (M1-Mn, N1-Nm).

8. Verfahren nach einem der vorhergehenden Ansprüche, ferner umfassend:
- Empfangen von Zieldaten zur maximalen Latenz, die eine erforderliche maximale Latenz angeben,
- Vergleichen jedes Latenzindikators mit der erforderlichen maximalen Latenz,
- Bereitstellen von Verzögerungsstatusdaten, die angeben, ob mindestens ein Latenzindikator die erforderliche maximale Latenz überschreitet.

9. Datenverarbeitungsvorrichtung (18), umfassend Mittel (28) zum Ausführen des Verfahrens nach einem der vorhergehenden Ansprüche.

10. Computerprogramm (26), umfassend Anweisungen, die, wenn das Computerprogramm (26) von einem Computer ausgeführt wird, den Computer veranlassen, das Verfahren nach Anspruch 1 bis 8 auszuführen.

11. Computerlesbares Speichermedium (24), umfassend Anweisungen, die, wenn sie von einem Computer ausgeführt werden, den Computer veranlassen, das Verfahren nach Anspruch 1 bis 8 auszuführen.

## Revendications

1. Procédé de détermination d'une latence de messages (M1-Mn, N1-Nm) transmis dans un réseau de communication série (10), le réseau de communication série (10) comprenant un premier nœud (12), un second nœud (14), et un bus partagé (16), le premier nœud (12) et le second nœud (14) étant reliés en comunication au bus partagé (16), le procédé comprenant :
- la réception de données de conception de réseau indiquant au moins un premier message (M1) et un second message (M2) associés au premier nœud (12) et un message supplémentaire (N1) associé au second nœud (14), le premier message (M1) présentant une première durée de message et un premier indicateur de priorité, le second message (M2) présentant une seconde durée de message et un second indicateur de priorité, et le message supplémentaire (N1) présentant une durée de message supplémentaire et un indicateur de priorité supplémentaire,
- la réception ou détermination de données de temps de retard indiquant au moins un laps de temps entre une fin du premier message (M1) et un début du second message (M2),
- le calcul d'une séquence de transmission de messages (30) sur la base des données de conception de réseau et des données de temps de retard, le calcul d'une séquence de transmission de messages (30) comprenant la détermination que le bus partagé (16) est au moins potentiellement inactif ou la réception d'un état inactif de bus, la détermination du message (M1-Mn, N1-Nm) présentant la priorité relativement la plus haute indiquée par l'indicateur de priorité relativement le plus bas, et la documentation de la transmission du message (M1-Mn, N1-Nm) présentant la priorité relativement la plus haute, et
- le calcul d'un indicateur de latence pour chaque message (M1-Mn, N1-Nm), l'indicateur de latence décrivant une période jusqu'au début de la transmission de chaque message (M1-Mn, N1-Nm) sur la base de la séquence de transmission de messages (30).

2. Procédé selon la revendication 1, dans lequel le calcul d'une séquence de transmission de messages (30) comprend la détermination du message (M1-Mn, N1-Nm) présentant le retard relativement le plus court indiqué par les données de temps de retard.

3. Procédé selon l'une quelconque des revendications précédentes, comprenant en outre la détermination d'une absence d'inversion de priorité interne pour le premier nœud (12) et/ou pour le second nœud (14).

4. Procédé selon l'une quelconque des revendications précédentes, dans lequel les données de temps de retard décrivent un retard d'une durée nominale de bit à une durée de message.

5. Procédé selon l'une quelconque des revendications précédentes, dans lequel l'indicateur de latence comprend un temps de préparation du premier nœud (12) ou second nœud (14) pertinent et/ou un temps d'interruption d'intervalle.

6. Procédé selon l'une quelconque des revendications précédentes, comprenant en outre la fourniture d'un rapport de latence.

7. Procédé selon l'une quelconque des revendications précédentes, comprenant en outre la détermination d'un indicateur de latence maximale et du message associé (M1-Mn, N1-Nm).

8. Procédé selon l'une quelconque des revendications précédentes, comprenant en outre
- la réception de données de latence maximale cible indiquant une latence maximale requise,
- la comparaison de chaque indicateur de latence à la latence maximale requise,
- la fourniture de données d'état de retard indiquant si au moins un indicateur de latence dépasse la latence maximale requise.

9. Appareil de traitement de données (18) comprenant des moyens (28) pour exécuter le procédé selon l'une quelconque des revendications précédentes.

10. Programme informatique (26) comprenant des instructions qui, lorsque le programme informatique (26) est exécuté par un ordinateur, amènent l'ordinateur à mettre en œuvre le procédé selon les revendications 1 à 8.

11. Support de stockage lisible par ordinateur (24) comprenant des instructions qui, lorsqu'elles sont exécutées par un ordinateur, amènent l'ordinateur à mettre en œuvre le procédé selon les revendications 1 à 8.
